# EUROPÄISCHE PATENTANMELDUNG

(11) **EP 4 614 040 A1**
(43) Veröffentlichungstag der Anmeldung: **10.09.2025**
(21) Anmeldenummer: 24161298.5
(22) Anmeldetag: 05.03.2024
(51) Int. Cl.: F16K 27/02, F16B 39/32

(54) **VENTILGEHÄUSE MIT EINEM SICHERUNGSELEMENT**

(71) Anmelder: Georg Fischer Rohrleitungssysteme AG, 8201 Schaffhausen (CH)
(72) Erfinder: Ebauer, Alexander, 8200 Schaffhausen (CH); Stoll, Eva, 79771 Klettgau (DE); Bürgi, Stefan, 8254 Basadingen (CH); Jäckle, Timo, 78247 Hilzingen (DE); Mitrovic, Dejan, 78183 Hüfingen (DE)
(74) Vertreter: Fenner, Seraina

(57) **Zusammenfassung**

Gehäuse (1) für ein Ventil, vorzugsweise ein Ventil bei dem der Hub zum Öffnen und Schliessen senkrecht zur Durchströmungsrichtung des Ventils erfolgt, beinhaltend ein Aussengehäuse (2) und ein Innengehäuse (3), wobei das Aussengehäuse (2) und das Innengehäuse (3) miteinander verschraubbar sind, wobei das Innengehäuse (3) einen umlaufenden Absatz (4) am Aussenumfang aufweist und ein Sicherungselement (5), wobei das Klemm- und Befestigungsbereich aufweisende Sicherungselement (5) als ein einteiliges, separates Teil ausgebildet ist, wobei der Befestigungsbereich des Sicherungselements (5) in einer unterhalb des Absatzes (4) am Aussenumfang des Innengehäuses (3) angeordneten Aussparung (11) formschlüssig angeordnet ist und der Klemmbereich des Sicherungselements (5) über den Absatz (4) hinausragt und in das Aussengehäuse (2) greift, wobei am Innenumfang des Aussengehäuses (2) eine Tasche angeordnet ist, in die der Klemmbereich des Sicherungselements (5) in der Endposition einschnappt, wobei der Klemmbereich eine nach aussen gerichtete plane, zur senkrecht verlaufenden Ventilachse (13) geneigte Klemmfläche aufweist.

## Beschreibung

Die Erfindung betrifft ein Gehäuse für ein Ventil, vorzugsweise ein Ventil bei dem der Hub zum Öffnen und Schliessen senkrecht zur Durchströmungsrichtung des Ventils erfolgt, beinhaltend ein Aussengehäuse und ein Innengehäuse, wobei das Aussengehäuse und das Innengehäuse miteinander verschraubbar sind, wobei das Innengehäuse einen umlaufenden Absatz am Aussenumfang aufweist und ein Sicherungselement, wobei das Klemm- und Befestigungsbereich aufweisende Sicherungselement als ein einteiliges, separates Teil ausgebildet ist, wobei der Befestigungsbereich des Sicherungselements in einer unterhalb des Absatzes am Aussenumfang des Innengehäuses angeordneten Aussparung formschlüssig angeordnet ist und der Klemmbereich des Sicherungselements über den Absatz hinausragt und in das Aussengehäuse greift, wobei am Innenumfang des Aussengehäuses eine Tasche angeordnet ist, in die der Klemmbereich des Sicherungselements in der Endposition einschnappt. Durch das Einschnappen des Klemmbereichs in die Tasche erfolgt ein Klicken, wodurch eine akustische Rückmeldung gegeben wird, dass sich das Aussengehäuse in der gewünschten Endposition befindet.

Im Rohrleitungsbau werden verschiedene Gehäuseteile miteinander verschraubt. Beispielsweise bei einem Ventil wie einem Membranventil oder einem Druckreduzierventil wie auch anderen Ventilen bei denen der Hub zum Öffnen und Schliessen senkrecht zur Durchströmungsrichtung des Ventils erfolgt.

Die Gehäuseteile müssen im Verlauf der Betriebszeit geöffnet werden können, um Bestandteile darin austauschen zu können.

Während des Betriebs der Ventile sollen die Gehäuseteile gegen Losdrehen der Gehäuseteile gesichert sein.

Die EP 2 264 344 A1 offenbart ein solches Gehäuse, bei dem ein Sicherungselement zum Sichern der beiden Gehäuseteile zueinander eingesetzt ist. Nachteilig daran ist die in der Herstellung aufwendige Verzahnung am Sicherungselement und am Innenumfang des Aussengehäuses. Ferner erhöht sich der Widerstand unnötigerweise, der sich beim Drehen des Aussengehäuses einrastenden und lösenden Verzahnung des Sicherungselements im Aussengehäuse, wobei ohnehin bereits ein hohes Drehmoment, vorliegt, durch die Bauart der zentralen Gehäuseverschraubung.

Es ist Aufgabe der Erfindung ein Gehäuse vorzuschlagen, welches mit möglichst geringem Kraftaufwand wieder öffenbar ist und gegen ungewolltes Losdrehen gesichert ist, sowie eine einfache Montage mit der Gewährleistung, dass eine vorgesehene Endposition erreicht ist und eine wirtschaftliche Herstellung erlaubt.

Diese Aufgabe wird erfindungsgemäss dadurch gelöst, dass der Klemmbereich eine nach aussen gerichtete plane, zur senkrecht verlaufenden Ventilachse geneigte Fläche aufweist.

Das erfindungsgemässe Gehäuse für ein Ventil, vorzugsweise ein Ventil, bei dem der Hub zum Öffnen und Schliessen senkrecht zur Durchströmungsrichtung des Ventils erfolgt, beinhaltet ein Aussengehäuse und ein Innengehäuse. Vorzugsweise werden solche Gehäuse bei Membranventilen, Druckreduzier- und Druckhalteventilen eingesetzt. Das Aussengehäuse, welches ein Innengewinde aufweist und das Innengehäuse, welches ein Aussengewinde aufweist, sind miteinander verschraubbar. Beim Aussengehäuse kann es sich um das Gehäuseoberteil wie auch um das Gehäuseunterteil handeln, was auch für das Innengehäuse zutrifft. Die Bezeichnung des Aussen- und Innengehäuses ist abhängig davon, welches Gehäuseteil die Mutter und welches den Bolzen der Gewindeverbindung bildet. Somit ist das Aussengehäuse das, welches das Innengehäuse im Verbindungsbereich überragt. Das Innengehäuse weist einen umlaufenden Absatz am Aussenumfang auf. Es ist vorteilhaft, wenn das Innengehäuse ein Aussengewinde aufweist und anschliessend der Absatz folgt, bei dem sich der Durchmesser vergrössert und das Aussengehäuse mit dem Innengewinde durch den Absatz im Festziehen begrenz ist.

Am erfindungsgemässen Gehäuse ist zudem ein Sicherungselement angeordnet. Das Sicherungselement weist einen Klemm- und Befestigungsbereich auf. Das Sicherungselement ist als ein einteiliges, separates Teil ausgebildet. Das Sicherungselement ist am Innengehäuse angeordnet. Der Befestigungsbereich des Sicherungselements ist formschlüssig in einer passenden Aussparung unterhalb des Absatzes am Aussenumfang des Innengehäuses angeordnet. Der Klemmbereich des Sicherungselements ragt über den Absatz hinaus und greift in das Aussengehäuse. Der Klemmbereich ragt an den Innenumfang des Aussengehäuses, wobei am Innenumfang des Aussengehäuses eine Tasche angeordnet ist, in die der Klemmbereich des Sicherungselements in der Endposition einschnappt. Der Klemmbereich weist eine nach aussen gerichtete plane, zur senkrecht verlaufenden Ventilachse nach aussen in radialer Richtung geneigte Klemmfläche auf. Durch die schräg zur Ventilachse verlaufende Klemmfläche nimmt die Dicke des Klemmstegs ausgehend vom Befestigungsbereich in radialer Richtung zu, wodurch ein Klemmeffekt und ein Verrasten in der Tasche des Aussengehäuses generiert wird und die Sicherung des Gehäuses gewährleistet ist.

Die Tasche ist vorzugsweise als Vertiefung im Innendurchmesser ausgebildet. Die Breite der Tasche entspricht vorzugsweise der Breite des Klemmstegs, damit dieser darin einschnappt und eine formschlüssige Verbindung gewährleistet, um das Aussengehäuse zu arretieren.

Es ist vorteilhaft, wenn im Aussengehäuse ein durchgehendes Fenster zur Erkennung des Sicherungselements angeordnet ist. Das Fenster ist als durchgehende Öffnung in der Wandung des Aussengehäuses ausgebildet, um das in der Endposition dahinterliegende Sicherungselement zu erkennen. Dies dient der optischen Kontrolle, ob das Sicherungselement eingerastet ist und das Gehäuse vor ungewolltem Losdrehen gesichert ist.

Vorzugsweise ist das Fenster im Bereich der Tasche angeordnet. Dies gewährleistet die Erkennung des Sicherungselements, wenn es in der Tasche greift. Das Fenster ist vorzugsweise kleiner als die Tasche ausgebildet.

Als bevorzugte Ausführungsform hat sich gezeigt, wenn das Fenster gegen die Stirnseite des Aussengehäuses hin offen ist. Dadurch weist das Fenster eine nach unten geöffnete U-Form auf. Diese Ausführungsform lässt sich in ihrer Herstellung einfach umsetzen.

Vorzugsweise sind das Aussengehäuse und das Innengehäuse aus Kunststoff hergestellt. Es ist vorteilhaft, wenn das Sicherungselement aus Kunststoff ist.

Selbstverständlich können entlang des Umfangs bei Bedarf mehrerer Sicherungselemente mit dafür vorgesehen Aussparungen angeordnet sein.

Es ist vorteilhaft, wenn der axial auf der Höhe des Klemmbereichs liegende Innendurchmesser des Aussengehäuses, als plane Ringfläche ausgebildet ist. Durch das vorliegende Sicherungselement, welches mit dem Klemmbereich in die Tasche greift und dadurch das Losdrehen des Aussengehäuses unterbindet kann auf eine Verzahnung am Innendurchmesser des Aussengehäuses verzichtet werden.

Als bevorzugte Ausführungsform hat sich gezeigt, wenn das Sicherungselement im Übergang zwischen Befestigungs- und Klemmbereich eine äussere Kante aufweist, wobei die äussere Kante einen konkav verlaufenden Radius aufweist.

Als bevorzugte Ausführungsform hat sich gezeigt, wenn ein Tastelement am Aussenumfang des Aussengehäuses zur haptischen Überprüfung der Anordnung des Sicherungselements angeordnet ist. Das Tastelement ist axial in einer Flucht mit dem Sicherungselement bei Erreichen der Endposition angeordnet. Dadurch kann durch Tasten erkannt werden, ob das Tastelement und das Sicherungselement auch untereinander und somit in korrekter Schliess- und Sicherungsstellung sind.

Es ist vorteilhaft, wenn am oberen Ende der Klemmfläche eine Gleitkontur angeordnet ist, damit der Innenumfang des Aussengehäuses über die Gleitkontur gleitet. Dadurch wird vermieden, dass die Stirnseite des Aussengehäuses an einer waagrecht zur Ventilachse verlaufenden oberen Fläche des Sicherungselements ansteht. Es ist vorteilhaft, wenn die Gleitkontur als eine Schräge, ein Radius, eine Kurve oder eine andere Kontur ausgebildet ist, die ein geschmeidiges darüber Gleiten des Innendurchmessers bzw. der Kante am Innendurchmesser des Aussengehäuses ermöglicht bzw. ein stumpfes Anstehen der Stirnseite des Aussengehäuses auf einer waagrecht zur Ventilachse verlaufenden Fläche des Sicherungselements vermeidet.

Als bevorzugte Ausführungsform hat sich gezeigt, wenn die innere Kante des Innenumfangs des Aussengehäuses als Gleitkontur ausgebildet ist. Die Gleitkontur kann als Schräge, Radius, Kurve oder eine andere Form ausgebildet sein, die unterstützt, dass die Stirnseite des Aussengehäuses nicht am Klemmbereich des Sicherungselements ansteht, sondern leichtgängig über die Klemmfläche gleitet.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch ein erfindungsgemässes Gehäuse,
Fig. 2 eine Detailansicht eines Sicherungselements bei noch nicht komplett verschraubtem Gehäuse,
Fig. 3 eine Detailansicht eines Sicherungselements bei verschraubtem Gehäuse bis zur Endposition,
Fig. 4 eine dreidimensionale Ansicht eines Sicherungselements mit seitlichen Wandungen,
Fig. 5 eine Seitenansicht eines Sicherungselements ohne seitliche Wandungen,
Fig. 6 eine dreidimensionale Ansicht eines Aussengehäuses,
Fig. 7 eine Detailansicht der Tasche am Innendurchmesser und
Fig. 8-10 unterschiedliche Ausführungsformen eines Sicherungselements und dessen Anordnung im Gehäuse.

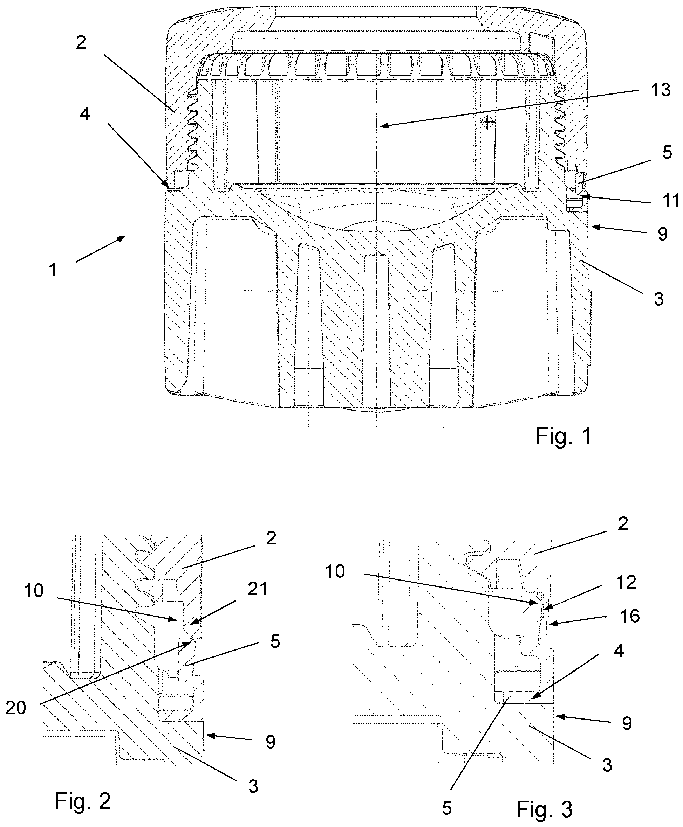

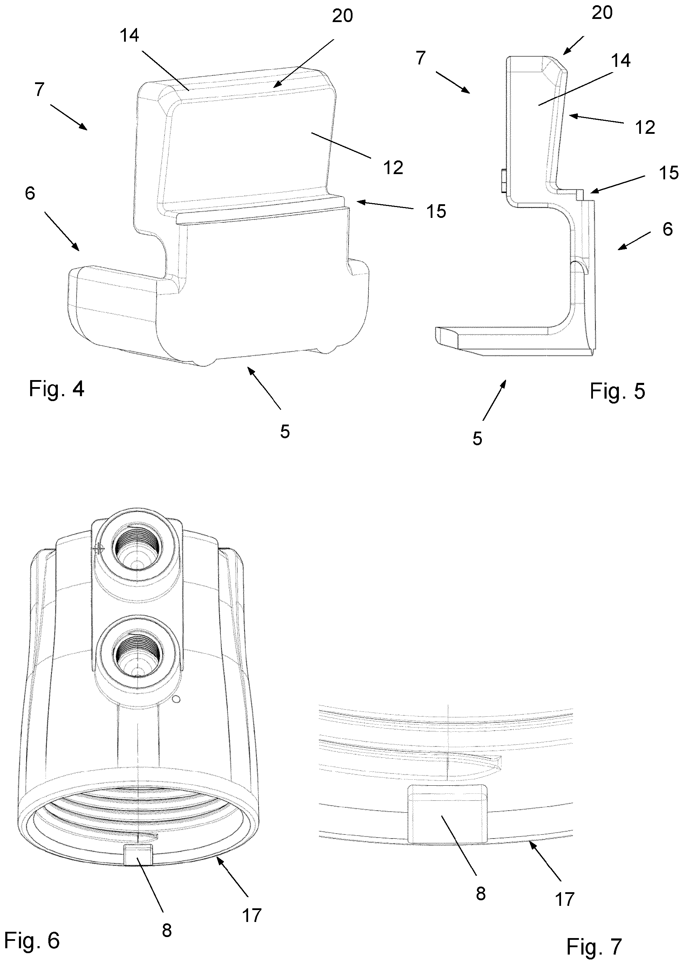

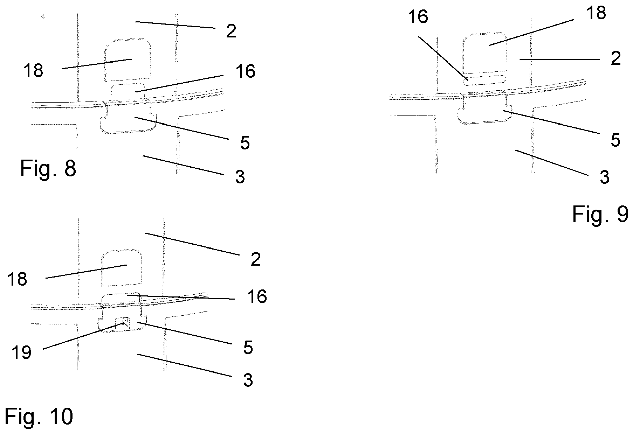

Die in Fig. 1 dargestellte Zeichnung zeigt ein erfindungsgemässes Gehäuse 1 für ein Ventil. Wobei solche Gehäuse 1 vorzugsweise für Druckhalte-, Druckregel- und Membranventile eingesetzt sind. Dieses Gehäuse 1 eignet sich für jegliche Ventile, bei denen der Hub zum Öffnen und Schliessen senkrecht zur Durchströmungsrichtung des Ventils erfolgt. Das Gehäuse 1 besteht aus einem Aussengehäuse 2 und einem Innengehäuse 3, die miteinander verschraubbar sind. Das Aussengehäuse 2 weist ein Innengewinde auf und bildet die Mutter der Gewindeverbindung und das Innengehäuse 3 weist ein Aussengewinde auf und bildet den Bolzen. In der dargestellten Ausführungsform ist das Gehäuseoberteil als Aussengehäuse 2 und das Gehäuseunterteil als Innengehäuse 3 dargestellt. Selbstverständlich kann dies aber auch umgekehrt sein. Am Aussenumfang des Innengehäuses 3 unterhalb des Absatzes 4 ist eine Aussparung 11 angeordnet in der ein Sicherungselement 5 angeordnet ist. Das Sicherungselement 5 weist einen Befestigungsbereich 6 und einen Klemmbereich 7 auf. Das Sicherungselement 5 ist als separates Teil ausgebildet, das in die Aussparung 11 formschlüssig eingesetzt ist, um das Aussengehäuse 2 vor dem ungewollten Losdrehen zu sichern. Der Klemmbereich 7 des Sicherungselements 5 ragt über den Absatz 4 hinaus und greift in das Aussengehäuse 2. In den Figuren 2 und 3 ist gut ersichtlich, wie der Klemmbereich 7 über den Absatz 4 ragt. Zudem zeigt Fig. 3 deutlich, wie der Klemmbereich 7 und der Klemmsteg 14 mit dessen nach aussen gerichteter Klemmfläche 12 in die Tasche 8 am Innenumfang 10 des Aussengehäuses greift. Auch gut aus Figur 2 ersichtlich ist, dass die Klemmfläche 12 schräg geneigt zur Ventilachse 13 verläuft und wenn sie in die Tasche 8 am Innenumfang 10 des Aussengehäuses 2 greift, gerade gedrückt wird, wodurch der Klemm- und Einrasteffekt am Aussengehäuse 2 umgesetzt wird. Als vorteilhaft hat sich gezeigt, wenn die nach aussen gerichtete obere Kante der Klemmfläche 12 als Gleitkontur 20 ausgebildet ist. Dies gewährleistet, dass die Stirnseite des Aussengehäuses 2 nicht an einer waagrecht zur Ventilachse 13 verlaufenden oberen Fläche ansteht, sondern geschmeidig über die Gleitkontur 20 gleitet. Als weiteren Vorteil hat sich gezeigt, wenn auch die innere Kante am Innenumfang 10 des Aussengehäuses 2 eine Gleitkontur 21 aufweist, was den Vorgang nochmals unterstütz. Figur 4 und 5 zeigen das einteilige vorzugsweise aus Kunststoff hergestellte Sicherungselement 5 separat dargestellt. Wobei Fig. 4 eine Ausführungsform mit seitlich angeordneten Wandungen und Fig. 5 eine Ausführungsform ohne solche Wandungen zeigt. Zwischen dem Befestigungsbereich 5 und dem Klemmbereich 7 verläuft eine Kante 15, die einen konkav angeordneten Radius aufweist (in Figuren 4 und 5 nur schematisch dargestellt), wodurch lokale Spannungen reduziert werden, und vermieden wird, dass der Klemmbereich 7 vom Befestigungsbereich 6 abgebrochen wird. In Figur 6 ist ein separates Aussengehäuse 2 dargestellt in der die Tasche 8, die nochmals vergrössert in Fig. 7 dargestellt ist, gezeigt wird. Die Tasche 8 ist axial am äusseren Ende bzw. unteren Randbereich am Innenumfang 10 des Aussengehäuses 2 angeordnet. Der Innenumfang 10 am Aussengehäuse 2 auf axialer Höhe der Tasche 8 ist als plane Ringfläche ausgebildet. Um auch optisch sicherzustellen, dass das Sicherungselement 5 in die Tasche 8 eingreift und das Gehäuse 1 gesichert ist, weist das Aussengehäuse 1 vorzugsweise ein Fenster 16 auf, das das dahinterliegende Sicherungselement 5 erkennen lässt. Die Figuren 8 bis 10 zeigen alternative Ausführungsformen in der Anordnung und Ausgestaltung der Fenster 16 und der Sicherungselemente 5. In der Figur 8 ist eine Ausführung gezeigt, bei der das Fenster 16 gegen die Stirnseite 17 des Aussengehäuses hin durchgehend offen ist, das Fenster 16 bildet eine U-förmige Ausnahme. Das Fenster 16, egal in welcher Ausführungsform es vorliegt, wenn ein Fenster vorhanden ist, ist es immer im Bereich der Tasche 8 angeordnet da dort der Klemmbereich 7 des Sicherungselements 5 vorliegt. Figur 9 zeigt eine Ausführungsform des Fensters 16 bei dem das Aussengehäuse 2 das Fenster 16 vollständig umgibt. Als weiteres Erkennungselement, ob das Sicherungselement 5 korrekt am Gehäuse vorliegt und seine Funktion wahrnimmt, ist die Anordnung eines Tastelements 18. Dies ermöglicht es dem Installateur, wenn die Sicht auf das Sicherungselement 5 nicht gewährleistet ist, über Tasten zu erkennen, ob das Sicherungselement 5 in einer Flucht mit dem Tastelement 18 liegt. Als mögliche Ausführungsform weist das Sicherungselement 5 im Befestigungsbereich eine radial verlaufende Aussparung 19 auf. Diese ermöglicht es das Sicherungselement 5 zum Öffnen des Gehäuses 1 mittels eines Schraubenziehers einfacher herauszuhebeln. In Figur 10 weist das Sicherungselement 5 eine Aussparung 19 auf, damit es vor dem Öffnen des Gehäuse 1 mit einem Werkzeug herausgehebelt werden kann.

### Bezugszeichenliste

- 1: Gehäuse
- 2: Aussengehäuse
- 3: Innengehäuse
- 4: Absatz
- 5: Sicherungselement
- 6: Befestigungsbereich
- 7: Klemmbereich
- 8: Tasche
- 9: Aussenumfang Innengehäuse
- 10: Innenumfang Aussengehäuse
- 11: Aussparung für Sicherungselement am Innengehäuse
- 12: Klemmfläche
- 13: Ventilachse
- 14: Klemmsteg
- 15: Kante zwischen Befestigungs- und Klemmbereich
- 16: Fenster
- 17: Stirnseite Aussengehäuse
- 18: Tastelement
- 19: Aussparung im Sicherungselement
- 20: Gleitkontur am Sicherungselement
- 21: Gleitkontur am Innendurchmesser Aussengehäuse

## Patentansprüche

1. Gehäuse (1) für ein Ventil, vorzugsweise ein Ventil bei dem der Hub zum Öffnen und Schliessen senkrecht zur Durchströmungsrichtung des Ventils erfolgt, beinhaltend ein Aussengehäuse (2) und ein Innengehäuse (3), wobei das Aussengehäuse (2) und das Innengehäuse (3) miteinander verschraubbar sind, wobei das Innengehäuse (3) einen umlaufenden Absatz (4) am Aussenumfang (9) aufweist und ein Sicherungselement (5), wobei das Klemm- (6) und Befestigungsbereich (7) aufweisende Sicherungselement (5) als ein einteiliges, separates Teil ausgebildet ist, wobei der Befestigungsbereich (6) des Sicherungselements (5) in einer unterhalb des Absatzes (4) am Aussenumfang (9) des Innengehäuses (3) angeordneten Aussparung (11) formschlüssig angeordnet ist und der Klemmbereich (7) des Sicherungselements (5) über den Absatz (4) hinausragt und in das Aussengehäuse (2) greift, wobei am Innenumfang (10) des Aussengehäuses (2) eine Tasche (8) angeordnet ist, in die der Klemmbereich (7) des Sicherungselements (5) in der Endposition einschnappt, **dadurch gekennzeichnet, dass** der Klemmbereich (7) eine nach aussen gerichtete plane, zur senkrecht verlaufenden Ventilachse (13) geneigte Klemmfläche (12) aufweist.

2. Gehäuse (1) nach Anspruch 1, **dadurch gekennzeichnet, dass** im Aussengehäuse (2) ein durchgehendes Fenster (16) zur Erkennung des Sicherungselements (5) angeordnet ist.

3. Gehäuse (1) nach einem der Ansprüche 1 oder 2, **dadurch gekennzeichnet, dass** das Fenster (16) im Bereich der Tasche (8) angeordnet ist.

4. Gehäuse (1) nach einem der Ansprüche 1 bis 3, **dadurch gekennzeichnet, dass** das Fenster (16) gegen die Stirnseite (17) des Aussengehäuses (2) hin offen ist.

5. Gehäuse (1) nach einem der Ansprüche 1 bis 4, **dadurch gekennzeichnet, dass** das Aussengehäuse (2) und das Innengehäuse (3) aus Kunststoff sind.

6. Gehäuse (1) nach einem der Ansprüche 1 bis 5, **dadurch gekennzeichnet, dass** der axial auf der Höhe des Klemmbereichs (7) liegende Innenumfang (10) des Aussengehäuses (2), als plane Ringfläche ausgebildet ist.

7. Gehäuse (1) nach einem der Ansprüche 1 bis 6, **dadurch gekennzeichnet, dass** das Sicherungselement (5) im Übergang zwischen Befestigungs (6)- und Klemmbereich (7) eine äussere Kante (15) aufweist, wobei die äussere Kante (15) einen konkav verlaufenden Radius aufweist.

8. Gehäuse (1) nach einem der Ansprüche 1 bis 7, **dadurch gekennzeichnet, dass** ein Tastelement (18) am Aussenumfang des Aussengehäuses (2) zur haptischen Überprüfung der Anordnung des Sicherungselements (5) angeordnet ist.

9. Gehäuse (1) nach einem der Ansprüche 1 bis 8, **dadurch gekennzeichnet, dass** am oberen Ende der Klemmfläche (12) eine Gleitkontur (20) angeordnet ist, damit der Innenumfang (10) des Aussengehäuses über die Gleitkontur (20) gleitet.

10. Gehäuse (1) nach einem der Ansprüche 1 bis 9, **dadurch gekennzeichnet, dass** die innere Kante des Innenumfangs (10) des Aussengehäuses (2) als Gleitkontur (21) ausgebildet ist.
